# EUROPÄISCHE PATENTSCHRIFT

(11) **EP 0 711 589 B1**
(45) Veröffentlichungstag und Bekanntmachung des Hinweises auf die Patenterteilung: **04.07.2001**
(21) Anmeldenummer: 95116454.0
(22) Anmeldetag: 19.10.1995
(51) Int. Cl.: B01D 33/044, B01D 33/048

(54) **Bandfiltereinrichtung zum Ausbringen von Fremdpartikeln aus Flüssigkeitsbädern**
Device with filtering bands for removing foreign particles from liquid baths
Dispositif à bandes filtrantes pour l'enlèvement de particules étrangères de bains liquides

(30) Priorität: 09.11.1994 DE 4439944
(43) Veröffentlichungstag der Anmeldung: 15.05.1996
(73) Patentinhaber: SMS Demag AG, 40237 Düsseldorf (DE)
(72) Erfinder: Schimion, Werner, D-57271 Hilchenbach (DE); Jung, Hubert, D-57271 Hilchenbach (DE)
(74) Vertreter: Valentin, Ekkehard, Dipl.-Ing.

(56) Entgegenhaltungen:
- EP-A- 0 512 288
- DE-A- 2 639 493
- US-A- 4 919 825
- US-A- 5 112 485

## Beschreibung

Die Erfindung betrifft eine Bandfiltereinrichtung zum Ausbringen von Fremdpartikeln aus Flüssigkeitsbädem, bestehend aus einer, die Flüssigkeit aufnehmenden Badwanne, einem Filterband, das als ein von einer Rolle abwickelbares Filterbandvlies ausgebildet ist und auf das eine endlose Umlaufkette aufgelegt wird, einer, in der Badwanne angeordneten, mit Unterdruck erzeugenden Einrichtungen verbundenen Unterdruckkammer mit Ansaugöffnungen, sowie, die Umlaufkette und das Filterbandvlies beaufschlagenden Führungsrollen die die Umlaufkette und das Filterbandvlies von oben in die Badwanne einbringen, über die Ansaugöffnungen der Unterdruckkammer führen und dann nach oben aus der Badwanne herausbringen, wobei die Unterdruckkammer als eine, um eine horizontale drehbar, in der Badwanne gelagerte Zylindertrommel ausgebildet ist, deren Innenraum die Unterdruckkammer bildet, und auf deren, die Ansaugöffnungen aufweisenden Umfangsmantel das Filterbandvlies und die Umlaufkette auflegbar sind, wobei oberhalb der Zylindertrommel, mit Abstand von einander und vom Umfangsmantel der Zylindertrommel die, das Filterbandvlies und die Umlaufkette an den Umfangsmantel heran- bzw. von diesem wieder wegführenden Führungsrollen angeordnet sind.

Bei einer Vorrichtung dieser Art (US-A-4 119 825) deren Umfangsmantel über die gesamte Mantelfläche verteilte Perforationen als Ansaugöffnungen aufweist, der, zwischen dem Führungsrollenpaar, daß das Filterbandvlies mit der Umlaufkette an dem Umfangsmantel heran- und von diesem weg führt, gebildete Mantelabschnitt durch eine ortsfeste Abdeckung verschlossen werden, die verhindert, daß Teile der Badflüssigkeit ungefiltert in die Zylindertrommel eindringen.

Bei einer anderen Vorrichtung (DE-A-2 639 493) soll das Eindringen der ungefilterten Flüssigkeit in diesen Mantelabschnitt dadurch vermieden werden, daß die Höhe des Flüssigkeitsspiegels in der Badwanne stets unterhalb der Höhe des, zwischen den Führungsrollenpaaren durchlaufende Mantelabschnitts gehalten wird.

Die feste Abdeckung nach der erstgenannten Bauweise erfordert genaue Einstellungen und Nachregulierungen der Abdeckungselemente und deren ständige Überwachung. Ähnliches gilt auch mit Bezug auf die an zweiter Stelle geschilderte Bauweise, da hier der Flüssigkeitsspiegel in der Badwanne ständig überwacht werden muß, wobei hinzu kommt, daß durch die Drehbewegung der Zylindertrommel Wellenbewegungen des Flüssigkeitsspiegels hervorgerufen werden, die häufig zum Einspülen von ungefilterter Flüssigkeit in den ungeschützten Mantelabschnitt führen.

Der Erfindung liegt die Aufgabe zugrunde, diesen Störaufwand zu vermeiden und darüber hinaus ein Einspülen ungefilterter Flüssigkeit in die Zylindertrommel zu verhindern.

Diese Aufgabe wird dadurch gelöst, daß die Zylindertrommel mit einer rohrförmigen Nabe auf einer, mit der, Unterdruck erzeugenden Einrichtung verbundenen Rohrachse lagert und in Sektorkammem unterteilt ist, die auf der rohrförmigen Narbe Austrittsöffnungen aufweisen die jeweils mit, in der Rohrachse angeordneten Eintrittsöffnungen drehschieberartig so zusammenwirken, daß der Unterdruck nur in den Sektorkammem wirksam wird, deren zugeordnete Abschnitte des Umfangsmantels der Zylindertrommel mit den Ansaugöffnungen von Filterband und Umlaufkette abgedeckt sind.

Diese Aufteilung der Zylindertrommel in Sektorkammem in Verbindung der Drehschiebersteuerung stellt sicher, daß während der Rotation der Zylindertrommel unabhängig von der jeweiligen Höhe des Flüssigkeitsspiegels in der Badwanne keine ungefilterte Flüssigkeit in die Zylindertrommel eindringen kann.

Die Erfindung wird anhand des in der Zeichnung dargestellten Ausführungsbeispiels näher erläutert. In der Zeichnung zeigen:
- Figur 1: die Bandfiltereinrichtung im Radialschnitt durch die Rotationsachse der Zylindertrommel schematischer Darstellung und
- Figur 2: eine Einzelheit aus Fig. 1 in vergrößertem Maßstab.

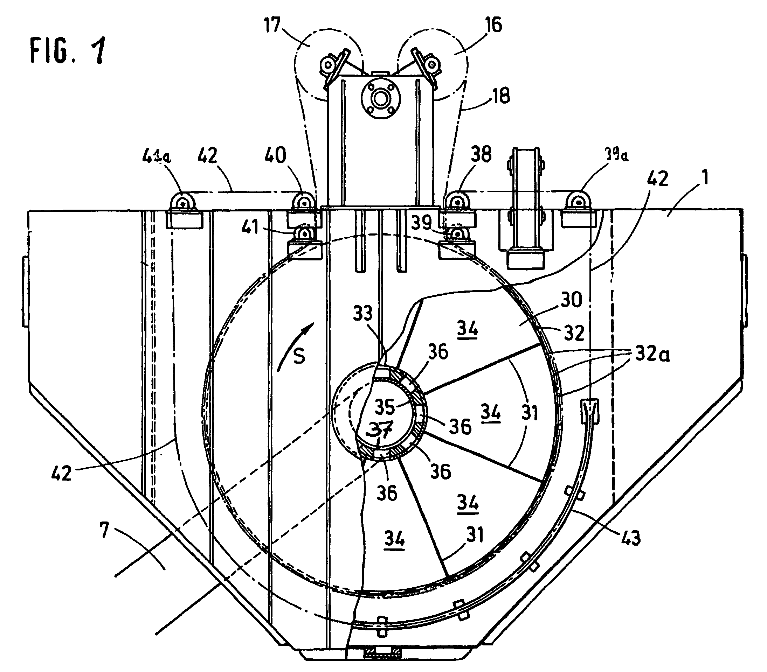

Bei dem Ausführungsbeispiel nach Fig. 1 weist die in einer Badwanne 1 selagerte Zylindertrommel 30 innenseitig radiale Zwischenwände 31 auf, die an die Innenwand des Umfangsmantels 32 angesetzt, auf dem Umfang einer Rohrnabe 33 enden und dabei eine Anzahl gleicher Sektorkammern 34 bilden. Die Rohrnabe 33 lagert auf einer ortsfesten Rohrachse 35 und weist zwischen den jeweiligen, einander benachbarten Zwischenwänden 31 Flüssigkeits-Austrittsöffnungen 36 auf, während die Rohrachse 35 in ihrem unteren Umfangsbereich mit einer Flüssigkeits-Eintrittsöffnung 37 versehen ist. Die Rohrachse 35 steht über ein, hier strichpunktiert angedeutetes Ansaugrohr 7 mit einer, nicht dargestellten Unterdruckeinrichtung in Verbindung. Auf den, mit Perforationsausnehmungen 32a versehenen Umfangsmantel 32 der Zylindertrommel 30 ist ein, in unterbrochenen Linien dargestelltes Filterbandvlies 18, abgewickelt von der Vorratsrolle 16, geführt durch die Führungsrollen 38, 39 und 40, 41 aufleg- und, mit Fremdpartikeln beladen, der Aufnahmerolle 17 zuführbar. Auf das, auf den Umfangsmantel 32 aufgelegte Filterbandvlies 18 wird , eine endlose Umlaufkette 42 aufgelegt, die, ebenfalls von den Führungsrollen 38, 39 bzw. 40, 41 und weitere Führungsrollen 41a, 39a aus der Badwanne 1 heraus- bzw. in diese hineingeführt wird. Der Rücklauf der Umlaufkette 42 erfolgt dabei innerhalb der Badwanne 1 durch eine oder zwei, mit Abstand konzentrisch zur Zylindertrommel 30 unter dieser angeordneten Führungsschienen 43.

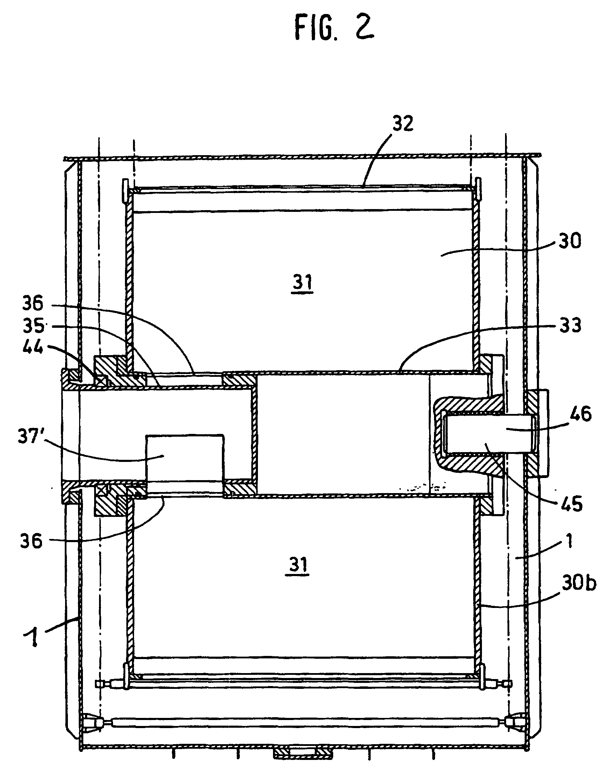

Wie aus Fig. 2 zu ersehen, ist die Rohrachse als ein, fest mit der Badwanne 1 verbundenes, nach außen offenes und nach innen geschlossenes topfförmiges Rohrstück 35' ausgebildet, auf dem die Rohrnabe 33 der Zylindertrommel 30 auf einer Seite in Lagern 44 gelagert ist. Auf der anderen Seite lagert die Rohrnabe 33 oder Zylindertrommel 30 mit einer Buchse 45 auf einem, mit der Badwanne 1 fest verbundenen Lagerzapfen 46. Das topfförmige Rohrstück 35 weist wie auch aus Fig. 1 ersichtlich, in seinem unteren Bereich eine Flüssigkeitseintrittsöffnung 37 auf und in der Rohrnabe 33 sind, diesen zugeordnete Flüssigkeitsaustrittsöffnungen 36 angeordnet.

Es bedarf hier keiner Abdichtung des Zwischenraums zwischen den Führungsrollen 39 und 41, um den Eintritt ungereinigter, noch mit Fremdpartikeln beladener Flüssigkeit in die Trommel zu verhindern, well durch die Unterteilung der Zylindertrommel 30 in Sektorenkammern 34 in Verbindung mit dem drehschieberartigen Zusammenwirken der Flüssigkeitsaustrittsöffnungen 36 der Rohrnabe 33 mit den Flüssigkeitseintrittsöffnungen 37 der Rohrachse 35 die von der Unterdruckeinrichtung ausgehende Saugwirkung nur in den Sektorkammern 34 wirksam wird, deren zugeordneter Abschnitt des Umfangsmantels 32 bereits mit dem von der Führungsrolle 39 auf diesen aufgelegten Filterbandvlies 18 abgedeckt ist. Die auf das Filterbandvlies 18 aufgelegte endlose Umlaufkette 42 verhindert dabei ein Aufschwimmen des Filterbandvlieses 18 in den Bereichen des Umfangsmantels, in denen die zugeordnete Sektorenkammer 34 über ihre Flüssigkeitsaustrittsöffnungen 36 noch nicht mit der Unterdruckeinrichtung verbunden ist.

### Bezugszeichenliste

- 1: Badwanne
- 7: Ansaugrohr
- 16: Vorratsrolle
- 17: Aufnahmerolle
- 18: Filterbandvlies
- 30: Zylindertrommel
- 31: (radiale) Zwischenwände
- 32: Umfangsmantel (der Zylindertrommel)
- 32a: Perforierungsausnehmungen (des Umfangsmantels)
- 33: Rohrnabe
- 34: Sektorkammern
- 35: Rohrachse
- 36: Flüssigkeitsaustrittsöffnungen
- 37: Flüssigkeitseintrittsöffnungen
- 38: Führungsrolle
- 39: Führungsrolle
- 40: Führungsrolle
- 41: Führungsrolle .
- 42: (endlose) Umlaufkette
- 43: Führungsschiene
- 44: Lager
- 45: Büchse
- 46: Lagerzapfen

## Patentansprüche

1. Bandfiltereinrichtung zum Ausbringen von Fremdpartikeln aus Flüssigkeitsbehältern, bestehend aus einer, die Flüssigkeit aufnehmenden Badwanne (1), einem Filterband, das als ein, von einer Rolle (16) abwickelbares Filterband, das als Filterbandvlies (18) ausgebildet ist, und auf das eine endlose Umlaufkette (42) auflegbar ist, einer, in der Badwanne (1) angeordneten, mit Unterdruck erzeugenden Einrichtungen verbundenen Unterdruckkammer mit Ansaugöffnungen, sowie, die Umlaufkette (42) und das Filterbandvlies (18) beaufschlagenden Führungsrollen (38, 39; 40, 41), die die Umlaufkette (42) und das Filterbandvlies (18) von oben in die Badwanne (1) einbringen, über Ansaugöffnungen der Unterdruckkammer führen und dann nach oben aus der Badwanne (1) herausbringen, wobei die Unterdruckkammer als eine, um eine horizontale Achse drehbar in der Badwanne (1) gelagerte Zylindertrommel (30) ausgebildet ist, deren Innenraum die Unterdruckkammer bildet, und auf deren, die Ansaugöffnungen (32 a) aufweisenden Umfangsmantel (32) das Filterbandvlies (18) und die Umlaufkette (42) auflegbar sind, wobei oberhalb der Zylindertrommel (30), mit Abstand voneinander und vom Umfangsmantel (32) der Zylindertrommel (30) die, die Umlaufkette (42) und das Filterbandvlies (18) an den Umfangsmantel (32) heran- bzw. von diesem wieder weg führenden Führungsrollen (38, 39; 40, 41) angeordnet ist,
**dadurch gekennzeichnet,**
daß die Zylindertrommel (30) mit einer rohrförmigen Nabe (33) auf einer, mit der Unterdruck erzeugenden Einrichtung verbundenen Rohrachse (35) lagert und in Sektorkammem (34) unterteilt ist, die in der rohrförmigen Nabe (33) Austrittsöffnungen (36) aufweisen, die jeweils mit, in der Rohrachse (35) angeordneten Eintrittsöffnungen (37) drehschieberartig so zusammenwirken, daß der Unterdruck nur in den Sektorkammern (34) wirksam wird deren zugeordnete Abschnitte des Umfangsmantels (32) der Zylindertrommel (30) mit den Ansaugöffnungen (32 a) von Filterband (18) und Umlaufkette (32) abgedeckt sind.

## Claims

1. Belt filter device for removal of foreign particles from liquid containers, consisting of a bath tank (1) receiving the liquid, a filter belt which is formed as a filter belt which can be unwound from a roll (16), is formed as a filter belt fleece (18) and against which an endless circulating chain (42) can be placed, an underpressure chamber, which is arranged in the bath tank (1) and is connected with devices producing underpressure, with suction openings, as well as guide rollers (38, 39; 40, 41) which act on the circulating chain (42) and the filter belt fleece (18) and bring the circulating chain (42) and the filter belt fleece (18) from above into the bath tank (1), guide them over suction openings of the underpressure chamber and then take them upwardly out of the bath tank (1), wherein the underpressure chamber is constructed as a cylinder drum (30) which is mounted to be rotatable about a horizontal axis in the bath tank 11) and the interior space of which forms the underpressure chamber, and against the circumferential surface (32), which has suction openings (32a), of which the filter belt fleece (18) and the circulating chain (42) can be placed, wherein the guide rollers (38, 39; 40, 41) guiding the circulating chain (42) and the filter belt fleece (18) to the circumferential surface (32) and away from this again are arranged above the cylinder drum (30) at a spacing from one another and from the circumferential surface (32), characterised in that the cylinder drum (30) is mounted by a tubular hub (33) on a tubular axle (35) connected with the device producing the underpressure and is divided into sector chambers (34) which have in the tubular hub (33) outlet openings (36) which each so co-operate in the manner of a rotary slide valve with inlet openings (37) arranged in the tubular axle (35) that the underpressure is effective only in the sector chambers (34) of which the associated portions of the circumferential surface (32) of the cylinder drum (30) are covered by the suction openings (32a) of the filter belt (18) and circulating chain (32).

## Revendications

1. Dispositif à bande filtrante pour enlever des particules étrangères hors de réservoirs de liquides, constitué par une cuve (1) recevant le liquide, par une bande filtrante réalisée sous forme de nappe de bande filtrante (18) susceptible d'être déroulée à partir d'un rouleau (16) et sur laquelle peut venir se poser une chaîne en recirculation sans fin (42), par une chambre sous dépression comportant des ouvertures d'aspiration et étant reliée à des dispositifs agencés dans la cuve (1) et générant une dépression, ainsi que par des galets de guidage (38, 39 ; 40, 41) qui engagent la chaîne en recirculation (42) et la nappe de bande filtrante (18) et qui introduisent la chaîne en recirculation (42) et la nappe de bande filtrante (18) depuis le haut dans la cuve (1) et les mènent pardessus des ouvertures d'aspiration de la chambre sous dépression et les font sortir ensuite vers le haut hors de la cuve (1), la chambre de dépression étant réalisée sous forme d'un tambour cylindrique (30) monté en rotation autour d'un axe horizontal dans la cuve (1), dont le volume intérieur forme la chambre sous dépression, et sur l'enveloppe périphérique (32) du tambour, présentant les ouvertures d'aspiration (32a), peuvent venir se poser la nappe de bande filtrante (18) et la chaîne en recirculation (42), des galets de guidage (38, 39 ; 40, 41) étant disposés au-dessus du tambour cylindrique (30) qui, à distance l'un de l'autre et de l'enveloppe périphérique (32) du tambour cylindrique (30), rapprochent et éloignent la chaîne en recirculation (42) et la nappe de bande filtrante (18) vers ou depuis l'enveloppe périphérique (32), caractérisé en ce que le tambour cylindrique (30) est monté avec un moyeu tubulaire (33) sur un axe tubulaire (35) relié au dispositif générant la dépression, et en ce que ledit tambour est subdivisé en chambres en secteur (34) qui présentent des ouvertures de sortie (36) dans le moyeu tubulaire (33), lesquelles coopèrent chacune avec des ouvertures d'admission respectives (37) ménagées dans l'axe tubulaire (35) à la manière d'un tiroir rotatif, de telle sorte que la dépression n'agit que dans les chambres en secteur (34) dont les tronçons associés de l'enveloppe périphérique (32) du tambour cylindrique (30) comportant les ouvertures d'aspiration (32a) sont recouverts par la bande filtrante (18) et par la chaîne en recirculation (42).
